# EUROPÄISCHE PATENTSCHRIFT

(11) **EP 3 077 658 B1**
(45) Veröffentlichungstag und Bekanntmachung des Hinweises auf die Patenterteilung: **19.06.2019**
(21) Anmeldenummer: 14786516.6
(22) Anmeldetag: 21.10.2014
(51) Int. Cl.: F02M 59/36, F02M 63/00

(54) **ELEKTROMAGNETISCH BETÄTIGTES VENTIL**
SOLENOID-OPERATED VALVE
VANNE À COMMANDE ÉLECTROMAGNÉTIQUE

(30) Priorität: 06.12.2013 DE 102013225162
(43) Veröffentlichungstag der Anmeldung: 12.10.2016
(73) Patentinhaber: Robert Bosch GmbH, 70442 Stuttgart (DE)
(72) Erfinder: MEISIEK, Achim, 73635 Rudersberg (DE); KOLB, Stefan, 71139 Ehningen (DE)
(86) Internationale Anmeldenummer: PCT/EP2014/072522
(87) Internationale Veröffentlichungsnummer: WO 2015/082118

(56) Entgegenhaltungen:
- DE-A1-102010 027 745
- DE-A1-102011 088 108
- JP-A- H09 112 731
- US-B1- 6 439 214

## Beschreibung

Die Erfindung betrifft ein elektromagnetisch betätigtes Ventil mit einem einen Ventilteller tragenden Ventilkolben, wobei an dem Ventilkolben ein Federteller befestigt ist, an dem eine das Ventil in eine geschlossene Stellung bewegende Ventilfeder anliegt, weiterhin aufweisend einen Elektromagneten mit einer Spule und einem auf einem Ankerbolzen angeordneten Anker, wobei der Ankerbolzen über eine Kontaktstelle mit dem Ventilkolben zusammenwirkt.

### Stand der Technik

Ein derartig elektromagnetisch betätigtes Ventil ist aus der DE 10 2011 088 108 A1 bekannt. Dieses elektromagnetisch betätigte Ventil ist als Einlassventil für eine Hochdruckpumpe eines Kraftstoffeinspritzsystems ausgebildet. Das elektromagnetisch betätigte Ventil bestimmt dabei die einem Hochdruckpumpenarbeitsraum zuzuführende Kraftstoffmenge. Das elektromagnetisch betätigte Ventil weist einen Elektromagneten mit einem auf einem Ankerbolzen angeordneten Anker auf, wobei der Ankerbolzen über eine Kontaktstelle mit einem Ventilkolben des Ventils zusammenwirkt. Benachbart zu der Kontaktstelle weist der Ventilkolben eine umlaufende Ringnut auf, in die ein sich umfangsmäßig über die Nut hinaus erstreckender Ventilteller eingesetzt ist. An dem Ventilteller stützt sich eine Ventilfeder ab, die das Ventil im Ruhezustand in eine geschlossene Stellung bewegt.

Durch die US 6 439 214 B1 ist ein elektromagnetisch betätigtes Ventil bekannt, das einen einen Ventilteller tragenden Ventilkolben aufweist. Am Ventilkolben ist ein Federteller befestigt, an dem eine das Ventil in eine geschlossene Stellung bewegende Ventilfeder anliegt. Das Ventil weist ferner einen Elektromagneten mit einer Spule und einen auf einem Ankerbolzen angeordneten Anker auf, wobei der Ankerbolzen über eine Kontaktstelle mit dem Ventilkolben zusammenwirkt.

Die Kontaktstelle ist gegenüber dem Durchmesser des Ankerbolzens und des Ventilkolbens durchmesservergrößert und ebenflächig ausgebildet. Der Federteller ist endseitig des Ventilkolbens angeordnet und eine erste Kontaktfläche der Kontaktstelle ist durch ein mit dem Federteller verbundenes Befestigungselement gebildet. Eine zweite Kontaktfläche der Kontaktstelle ist der Ankerbolzenfuss. Der Ankerbolzen weist eine im Abstand zum Ankerbolzenfuss angeordnete Ringnut auf, wobei der Durchmesser des Ankerbolzenfusses gegenüber dem restlichen Ankerbolzen außerhalb der Ringnut nicht vergrößert ist.

Der Erfindung liegt die Aufgabe zugrunde, ein elektromagnetisch betätigtes Ventil bereitzustellen, dessen Funktion bei einem geringen baulichen Aufwand verbessert ist.

### Offenbarung der Erfindung

### Vorteile der Erfindung

Diese Aufgabe wird dadurch gelöst, dass die zweite Kontaktfläche der Kontaktstelle an einem im Außendurchmesser gegenüber dem Durchmesser des Ankerbolzens vergrößerten Ankerbolzenfuss ausgebildet ist. Durch diese Vergrößerung der Kontaktstelle wird die auf die Kontaktstelle wirkende Flächenpressung des Ventilkolbens und des Ankerbolzens reduziert, wodurch ein Einarbeiten der aufeinander wirkenden Bauteile verhindert wird.

Insbesondere wird aber durch die Vergrößerung der Kontaktstelle eine Entstehung beziehungsweise Einleitung eines magnetischen Streuflusses des Elektromagneten begünstigt, wobei der magnetische Streufluss eine kraftschlüssige Haftung der Bauteile, also des Ventilkolbens und des Ankerbolzens an der Kontaktstelle zueinander bewirkt. Dadurch kann eine Schließbewegung des Ventils deutlich verbessert, insbesondere schneller ausgeführt werden. Hierbei ist davon auszugehen, dass der Elektromagnet in seinem unbestromten Zustand von einer Druckfeder mit dem Ankerbolzen gegen den Ventilkolben gedrückt wird und die Federkraft der Druckfeder größer ist als die der Ventilfeder, so dass im Ruhezustand das Ventil geöffnet ist. In diesem Ruhezustand ist also eine von dem Ventil beherrschte Strömungsverbindung offen und ein Fluidstrom strömt durch das Ventil. Erst wenn der Elektromagnet bestromt wird, wird der Ankerbolzen gegen die Kraft der Druckfeder bewegt und bei einer herkömmlichen Ausgestaltung von den Ventilkolben wegbewegt. Dementsprechend kann in diesem Betriebszustand die schwache Ventilfeder das Ventil in die geschlossene Position verfahren, wobei die von dem Ventil beherrschte Strömungsverbindung geschlossen wird. Dadurch, dass nun der Ankerbolzen und der Ventilkolben bei einer Bestromung der Spule durch magnetischen Streufluss beziehungsweise den erzeugten Magnetismus aufeinander haften, wird die Schließbewegung des Ventils deutlich schneller ausgeführt. Dadurch wird die Funktion des Systems bei geringem baulichen Aufwand verbessert. Insbesondere kann somit die von dem Ventil gesteuerte Fluidmenge genauer eingestellt werden kann. Zusammenfassend ergeben sich folgende wesentlichen Vorteile:
- es wird eine Reduzierung der Schaltzeit des Ventils erreicht und
- es wird eine verschleißfeste Kontaktstelle gebildet.

Der Ankerbolzenfuss kann durch entsprechende Ausgestaltung des Ankerbolzens einstückig mit dem Ankerbolzen ausgebildet sein. In weiterer Ausgestaltung ist der Ankerbolzenfuss aber als eigenständiges Bauteil ausgebildet und auf dem Ankerbolzen aufgepresst. Diese Ausgestaltung ist einfach und kostengünstig herstellbar.

In Weiterbilddung der Erfindung weist der Werkstoff des Federtellers und des Ankerbolzenfusses vorzugsweise in einem besonderen Maße ferromagnetische Eigenschaften auf. Der Ankerbolzen und der Ventilkolben werden schon herkömmlich aus einem ferromagnetischen Eisenwerkstoff gefertigt, so dass insgesamt Bauteile mit zumindest sehr ähnlichen Eigenschaften zum Einsatz kommen. Beispielsweise können der Ankerbolzenfuss und der Federteller aus einem besonders verschleißfesten und gleichzeitig ferromagnetischen Eisenwerkstoff gefertigt sein, wodurch ein möglicher Verschleiß an der Kontaktstelle weiter verringert wird. Dabei ist der kostenmäßige Mehraufwand durch die höherwertigen Materialien vernachlässigbar.

In Weiterbildung der Erfindung ist ein von dem Elektromagneten erzeugter Streumagnetfluss gezielt in die Kontaktstelle eingeleitet. Diese Einleitung wird durch die Ausgestaltung des Elektromagneten, des Ventils und der Gehäuseteile erreicht.

In Weiterbildung der Erfindung ist der Anker radial über eine Buchse und axial über Restluftspaltscheiben von den umhüllenden Bauteilen magnetisch getrennt. Dadurch wird ein magnetisches Klemmen vermieden und eine problemlose Ankerbewegung ermöglicht. Zudem kann diese Isolierung auch gezielt für die Einleitung des magnetischen Streuflusses in die Kontaktstelle mit den Kontaktflächen genutzt werden.

In weiterer Ausgestaltung der Erfindung ist das elektromagnetisch betätigte Ventil Teil einer Kraftstoffhochdruckpumpe zum Anbau an einer Brennkraftmaschine. Grundsätzlich ist das elektromagnetisch betätigte Ventil bei einem beliebigen System einsetzbar, wobei aber die geschilderten Vorteile insbesondere bei Einsatz an einer Kraftstoffhochdruckpumpe zum Tragen kommen. Mit dem elektromagnetisch betätigten Ventil wird die einem Pumpenarbeitsraum der Kraftstoffhochdruckpumpe zuzuführende Kraftstoffmenge bestimmt. Durch die Verbesserung des Schaltverhaltens kann die Genauigkeit der Mengenzumessung des Kraftstoffs durch das Ventil weiter erhöht werden. Durch die Reduzierung der Flächenpressung der aufeinander wirkenden Kontaktflächen wird die Lebensdauer der Kraftstoffhochdruckpumpe als solches verbessert.

Weitere vorteilhafte Ausgestaltungen der Erfindung sind der Zeichnungsbeschreibung zu entnehmen, in der ein in der Figur dargestelltes Ausführungsbeispiel näher beschrieben ist.

### Kurze Beschreibung der Zeichnung

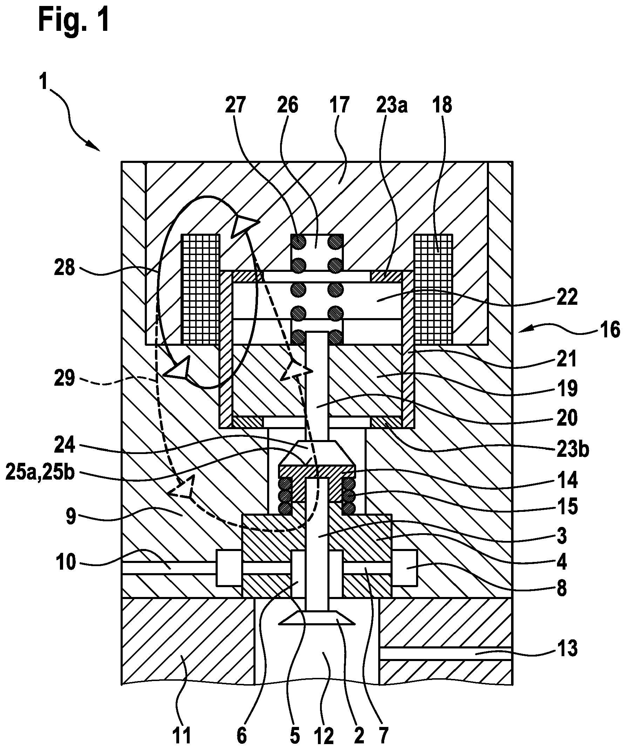

Die einzige Figur 1 zeigt einen Längsschnitt durch ein elektromagnetisch betätigtes Ventil, das an einer Kraftstoffhochdruckpumpe eines Kraftstoffeinspritzsystems verbaut ist.

### Ausführungsform der Erfindung

Das in Figur 1 dargestellte elektromagnetisch betätigte Ventil 1 weist ein eigentliches Ventil 1 mit einem einen Ventilteller 2 tragenden Ventilkolben 3 auf, wobei der Ventilkolben 3 in einem Ventilzylinder 4 unter gleichzeitiger Bildung eines Ventilsitzes 5 für den Ventilteller 2 geführt ist. Dem Ventilsitz 5 ist ein Ventilraum 6 benachbart, der über Bohrungen 7 mit einem umgebenden Ringraum 8 in einem Ventilgehäuse 9 verbunden ist. Der Ringraum 8 ist seinerseits über eine Zugangsbohrung 10 mit dem weiteren Kraftstoffsystem verbunden. Das Ventilgehäuse 9 ist beispielsweise in einem Pumpenzylinderkopf 11 einer Kraftstoffhochdruckpumpe eingebaut. In den Pumpenzylinderkopf 11 ist ein Pumpenarbeitsraum 12 der Kraftstoffhochdruckpumpe eingelassen, der bei der geöffnet dargestellten Position des Ventiltellers 2 über die Zugangsbohrung 10, den Ringraum 8, die Bohrungen 7 und den Ventilraum 6 mit Kraftstoff befüllt wird.

Diese Befüllung erfolgt bei einer Abwärtsbewegung eines unterhalb des Pumpenarbeitsraums 12 in einer Zylinderbohrung eines mit dem Pumpenzylinderkopf verbundenen Pumpenzylinders bewegbaren Pumpenkolben. Dieser Pumpenkolben wird von einer Nockenwelle oder Exzenterwelle der Kraftstoffhochdruckpumpe periodisch auf und ab bewegt, wobei der Pumpenkolben bei einer Aufwärtsbewegung des Pumpenkolbens und dann den Pumpenarbeitsraum 12 von dem Ventilraum 6 absperrenden Ventilteller 2 des Ventilkolbens 3 in dem Pumpenarbeitsraum 12 befindlichen Kraftstoff über einen Hochdruckauslass 13 mit einem eingesetzten Rückschlagventil in eine weiterführende Hochdruckleitung fördert, die mit einem Hochdruckspeicher des Kraftstoffeinspritzsystems verschaltet ist. Aus dem Hochdruckspeicher kann der dort unter einem Druck von bis 3.000 bar gespeicherte Kraftstoff von Kraftstoffinjektoren zur Einspritzung in zugeordnete Brennräume der Brennkraftmaschine entnommen werden. Der Zugangsbohrung 10 wird der Kraftstoff von einem Kraftstoffniederdrucksystem als Bestandteil des Kraftstoffeinspritzsystems beispielsweise aus einem Tank zugeführt.

Gegenüberliegend zu dem Ventilteller 2 ist an dem Ventilkolben 3 ein Federteller 14 befestigt, zwischen dem und dem Ventilgehäuse 9 eine Ventilfeder 15 eingespannt ist. Die Ventilfeder 15 weist eine geringe Federsteifigkeit auf und drückt (ungeachtet sonstiger einwirkender Kräfte) den Ventilteller 2 zur Anlage in den Ventilsitz 5. Oberhalb des Ventilkolbens 3 ist ein Elektromagnet 16 als Teil des elektromagnetisch betätigten Ventils 1 angeordnet, der eine in einem Magnetgehäuse 17 angeordnete Spule 18 aufweist. Das Magnetgehäuse 17 ist in eine Zylinderausnehmung in dem Ventilgehäuse 9 eingesetzt. Weiterhin weist der Elektromagnet 16 einen einen Anker 19 tragenden Ankerbolzen 20 auf, der in einer mit dem Ventilgehäuse 9 oder dem Magnetgehäuse 17 angeordneten Führung längsbeweglich geführt ist. Der Ankerbolzen 20 kann aber auch ohne eigene Führung verbaut sein und der Anker 19 durch eine den Anker 19 umgebende Buchse 21 aus einem magnetisch isolierenden Werkstoff in dem Ventilgehäuse 9 und/oder dem Magnetgehäuse 17 geführt sein. Weiterhin sind in einem den Anker 19 aufnehmenden Ankerraum 22 axiale Restluftspaltscheiben 23a, 23b verbaut, die ebenfalls aus einem magnetisch isolierenden Werkstoff hergestellt sind und die axialen Bewegungen des Ankers 19 und somit auch des Ankerbolzens 20 begrenzen.

An dem Ankerbolzen 20 ist ein Ankerbolzenfuss 24 befestigt, beispielsweise aufgepresst, wobei der Ankerbolzenfuss 24 gegenüber liegend zu dem Federteller 14 angeordnet ist und einen Außendurchmesser aufweist, der deutlich vergrößert zu dem Durchmesser des Ventilkolbens 3 und des Ankerbolzens 20 ist. Idealerweise weist der Ankerbolzenfuss den gleichen Außendurchmesser wie der Federteller 14 auf. Der Federteller 14 und der Ankerbolzenfuss 24 weisen eine erste Kontaktfläche 25a und eine zweite Kontaktfläche 25b auf, die zusammen eine Kontaktstelle zwischen dem Ventilkolben 3 und dem Ankerbolzen 20 bilden. Die Kontaktstelle beziehungsweise die Kontaktflächen 25a, 25b sind ebenflächig zueinander ausgebildet und übertragen insbesondere die von dem Elektromagneten 16 über den Ankerbolzen 20 ausgeübte Öffnungsbewegung auf den Ventilkolben 3. In dem Ankerraum 22 und einem darüber angeordneten Druckfederraum 26 ist eine Druckfeder 27 mit hoher Federsteifigkeit angeordnet, die im unbestromten Zustand der Spule 18 den Ankerbolzen 20 und den Ankerbolzenfuss 24 auf den Federteller 14 und somit unter Überwindung der Federkraft der Ventilfeder 15 den Ventilkolben 3 zur Einstellung der offenen Position des Ventiltellers 2 in Richtung zu dem Pumpenarbeitsraum 12 drückt.

Im bestromten Zustand der Spule 18 wird ein elektromagnetisches Feld 28 umfänglich der Spule 18 erzeugt, das den Anker 19 mitsamt dem Ankerbolzen 20 bis zur Anlage an der oberen Restluftspaltscheibe 23a nach oben bewegt. Dadurch kann die Ventilfeder 15 den Federteller 14 und damit den Ventilkolben 3 und den Ventilteller 2 nach oben hin zu einem Anliegen des Ventiltellers 2 in dem Ventilsitz 5 bewegen. Diese Bewegung wird unterstützt durch ein magnetisches Streufeld 29, das auf den Ankerbolzenfuss 24, den Ankerbolzen 20 sowie den Federteller 14 und den Ventilkolben 3 einwirkt und eine kraftschlüssige Haftung dieser Bauteile aufeinander bewirkt. Die hohe Schaltgeschwindigkeit des Elektromagneten 16 wird somit auch zum schnelleren Schließen des herkömmlich nur von der Ventilfeder 15 in Schließrichtung kraftbeaufschlagten Ventils 1 benutzt. Neben der schnelleren Schließbewegung des Ventils 1 wird durch die großflächigen Kontaktflächen 25a, 25b die Flächenpressung in den Kontaktflächen 25a, 25b reduziert.

## Patentansprüche

1. Elektromagnetisch betätigtes Ventil (1) mit einem einen Ventilteller (2) tragenden Ventilkolben (3), wobei an dem Ventilkolben (3) ein Federteller (14) befestigt ist, an dem eine das Ventil (1) in eine geschlossene Stellung bewegende Ventilfeder (15) anliegt, weiter aufweisend einen Elektromagneten (16) mit einer Spule (18) und einem auf einem Ankerbolzen (20) angeordneten Anker (19), wobei der Ankerbolzen (20) über eine Kontaktstelle (25a,25b) mit dem Ventilkolben (3) zusammenwirkt, wobei die Kontaktstelle (25a,25b) gegenüber dem Durchmesser des Ankerbolzens (20) und des Ventilkolbens (3) durchmesservergrößert und ebenflächig ausgebildet ist,
**dadurch gekennzeichnet, dass** eine zweite Kontaktfläche (25b) der Kontaktstelle (25a,25b) von einem endseitig an dem Ankerbolzen (20) angeordneten Ankerbolzenfuss (24) gebildet ist, der einen gegenüber dem Ankerbolzen (20) vergrößerten Außendurchmesser aufweist.

2. Elektromagnetisch betätigtes Ventil (1) nach Anspruch 1,
**dadurch gekennzeichnet, dass** der Federteller (14) endseitig des Ventilkolbens (3) angeordnet ist und eine erste Kontaktfläche (25a) der Kontaktstelle (25a,25b) ist.

3. Elektromagnetisch betätigtes Ventil (1) nach Anspruch 1 oder 2,
**dadurch gekennzeichnet, dass** der Ankerbolzenfuss (24) auf den Ankerbolzen (20) aufgepresst ist.

4. Elektromagnetisch betätigtes Ventil (1) nach einem der Ansprüche 1 bis 3,
**dadurch gekennzeichnet, dass** der Werkstoff des Federtellers (14) und des Ankerbolzenfusses (24) ferromagnetisch ist.

5. Elektromagnetisch betätigtes Ventil (1) nach einem der vorherigen Ansprüche,
**dadurch gekennzeichnet, dass** ein von dem Elektromagneten (16) erzeugtes magnetisches Streufeld (29) in die Kontaktstelle (25a,25b) eingeleitet ist.

6. Elektromagnetisch betätigtes Ventil (1) nach einem der vorherigen Ansprüche,
**dadurch gekennzeichnet, dass** der Anker (19) radial über eine Buchse (21) und axial über Restluftspaltscheiben (23a, 23b) von umhüllenden Bauteilen magnetisch getrennt ist.

7. Elektromagnetisch betätigtes Ventil (1) nach einem der vorherigen Ansprüche,
**dadurch gekennzeichnet, dass** der Ankerbolzen (20) von einer Druckfeder (27) beaufschlagt im unbestromten Zustand des Elektromagneten (16) das Ventil (1) in eine geöffnete Stellung drückt.

8. Elektromagnetisch betätigtes Ventil (1) nach einem der vorherigen Ansprüche,
**dadurch gekennzeichnet, dass** das elektromagnetisch betätigte Ventil (1) ein Einlassventil einer Kraftstoffhochdruckpumpe für eine Brennkraftmaschine ist.

## Claims

1. Electromagnetically actuated valve (1) having a valve piston (3) which bears a valve plate (2), wherein a spring plate (14) is fastened to the valve piston (3), against which spring plate a valve spring (15) bears, which valve spring moves the valve (1) into a closed position, furthermore having an electromagnet (16) with a coil (18) and with an armature (19) arranged on an armature pin (20), wherein the armature pin (20) interacts, by way of a contact point (25a, 25b), with the valve piston (3), wherein the contact point (25a, 25b) is formed so as to be of enlarged diameter in relation to the diameter of the armature pin (20) and of the valve piston (3) and so as to have a planar surface,
**characterized in that** a second contact surface (25b) of the contact point (25a, 25b) is formed by an armature pin foot (24) arranged at an end side on the armature pin (20), which armature pin foot has an enlarged outer diameter in relation to the armature pin (20).

2. Electromagnetically actuated valve (1) according to Claim 1,
**characterized in that** the spring plate (14) is arranged at an end side of the valve piston (3) and is a first contact surface (25a) of the contact point (25a, 25b).

3. Electromagnetically actuated valve (1) according to Claim 1 or 2, **characterized in that** the armature pin foot (24) is pressed onto the armature pin (20).

4. Electromagnetically actuated valve (1) according to any of Claims 1 to 3, **characterized in that** the material of the spring plate (14) and of the armature pin foot (24) is ferromagnetic.

5. Electromagnetically actuated valve (1) according to any of the preceding claims,
**characterized in that** a magnetic leakage field (29) generated by the electromagnet (16) is introduced into the contact point (25a, 25b).

6. Electromagnetically actuated valve (1) according to any of the preceding claims,
**characterized in that** the armature (19) is magnetically separated from surrounding components radially by means of a bushing (21) and axially by means of residual air gap disks (23a, 23b).

7. Electromagnetically actuated valve (1) according to any of the preceding claims,
**characterized in that** the armature pin (20), acted on by a compression spring (27), pushes the valve (1) into an opened position in the electrically deenergized state of the electromagnet (16).

8. Electromagnetically actuated valve (1) according to any of the preceding claims,
**characterized in that** the electromagnetically actuated valve (1) is an inlet valve of a highpressure fuel pump for an internal combustion engine.

## Revendications

1. Soupape (1) à actionnement électromagnétique, comprenant un piston de soupape (3) qui supporte un disque de soupape (2), une coupelle de ressort (14) étant fixée au piston de soupape (3), contre laquelle repose un ressort de soupape (15) qui déplace la soupape (1) dans une position fermée, comprenant en outre un électroaimant (16) pourvu d'une bobine (18) et un induit (19) disposé sur un goujon d'induit (20), le goujon d'induit (20) coopérant avec le piston de soupape (3) par le biais d'un point de contact (25a, 25b), le point de contact (25a, 25b) ayant un diamètre agrandi par rapport au diamètre du goujon d'induit (20) et du piston de soupape (3) et étant configuré avec une surface plane, **caractérisée en ce qu'**une deuxième surface de contact (25b) du point de contact (25a, 25b) est formée par un pied de goujon d'induit (24) disposé du côté de l'extrémité au niveau du goujon d'induit (20), lequel présente un diamètre extérieur agrandi par rapport au goujon d'induit (20).

2. Soupape (1) à actionnement électromagnétique selon la revendication 1, **caractérisée en ce que** la coupelle de ressort (14) est disposée du côté de l'extrémité du piston de soupape (3) et constitue une première surface de contact (25a) du point de contact (25a, 25b).

3. Soupape (1) à actionnement électromagnétique selon la revendication 1 ou 2, **caractérisée en ce que** le pied de goujon d'induit (24) est emmanché sur le goujon d'induit (20).

4. Soupape (1) à actionnement électromagnétique selon l'une des revendications 1 à 3, **caractérisée en ce que** le matériau de la coupelle de ressort (14) et du pied de goujon d'induit (24) est ferromagnétique.

5. Soupape (1) à actionnement électromagnétique selon l'une des revendications précédentes, **caractérisée en ce qu'**un champ rayonné magnétique (29) généré par l'électroaimant (16) est engagé dans le point de contact (25a, 25b).

6. Soupape (1) à actionnement électromagnétique selon l'une des revendications précédentes, **caractérisée en ce que** l'induit (19) est séparé magnétiquement des éléments structuraux enveloppants, dans le sens radial par le biais d'une douille (21) et dans le sens axial par le biais de rondelles à entrefer résiduel (23a, 23b).

7. Soupape (1) à actionnement électromagnétique selon l'une des revendications précédentes, **caractérisée en ce que** lorsque l'électroaimant (16) est non alimenté, le goujon d'induit (20), sollicité par un ressort de compression (27), pousse la soupape (1) dans une position ouverte.

8. Soupape (1) à actionnement électromagnétique selon l'une des revendications précédentes, **caractérisée en ce que** la soupape (1) à actionnement électromagnétique est une soupape d'admission d'une pompe à haute pression à carburant pour un moteur à combustion interne.
